# EUROPÄISCHE PATENTSCHRIFT

(11) **EP 1 748 529 B1**
(45) Veröffentlichungstag und Bekanntmachung des Hinweises auf die Patenterteilung: **20.08.2008**
(21) Anmeldenummer: 05016537.2
(22) Anmeldetag: 29.07.2005
(51) Int. Cl.: H02J 3/00

(54) **Verfahren und System zur Prognose der benötigten Energiemengen eines, insbesondere industriellen Verbrauchers von einem Energieversorger oder Energielieferanten sowie Vorrichtung zur Energiebedarfsprognose**
Method and system for the forecast of needed energy quantities of a consumer, in particular industrial consumer, from an energy provider or energy dispatcher, and device for energy need forecast
Procédé et système pour le pronostic des quantités d'énergie demandées par un consommateur, en particulier un consommateur industriel, à un producteur ou fournisseur d'énergie, et dispositif pour le pronostic de ces besoins en énergie

(43) Veröffentlichungstag der Anmeldung: 31.01.2007
(73) Patentinhaber: TechniData AG, 88677 Markdorf (DE)
(72) Erfinder: Clesle, Frank-Dieter, 88214 Ravensburg (DE); Saller, Dr. Gerhard, 57078 Siegen (DE)
(74) Vertreter: Muri, Peter

(56) Entgegenhaltungen:
- US-A1- 2003 061 091
- US-A1- 2004 225 413

## Beschreibung

Die Erfindung bezieht sich auf ein Verfahren sowie dessen Verwendung zur Prognose der benötigten Energiemengen eines, insbesondere industriellen Verbrauchers von einem Energieversorger oder einem Energielieferanten und ein entsprechendes Prognosesystem. Darüber hinaus betrifft die Erfindung ein System mit dem das erfindungsgemäße Verfahren zur Prognose der benötigten Energie angewendet werden kann.

### Definitionen

Unter dem Begriff "Energie" kann jegliche Art von thermischer, mechanischer oder physikalischer Energie verstanden werden, beispielsweise Strom oder Gas.

"Energieversorger" wird im folgenden ein Unternehmen bezeichnet, das Energie erzeugt und diese Energie entweder unmittelbar über ein vorhandenes Netz an mindestens einen Verbraucher liefert oder die bereitgestellte Energie an einen Energielieferanten abgibt.

Unter der Bezeichnung "Energielieferant" sind solche Unternehmen zu verstehen, die Netze betreiben, die eine Energie transportieren und eine Verbindung zwischen einem Energieversorger und einem Verbraucher herstellen. Energielieferanten können beispielsweise Stadtwerke sein.

Ein "Verbraucher" im Sinne dieser Erfindung kann eine natürliche Person, eine Personengesellschaft, eine juristische Person oder eine sonstige Personenmehrheit verstanden werden, die Energie von einem Energieversorger oder einem Energielieferanten bezieht und die bezogene Energie mittels thermischer oder physikalischer Einrichtung verbraucht.

Mit "Prognoseplan" wird die Festlegung der Menge und des Zeitpunkts der benötigten Energie eines Verbrauchers innerhalb eines zukünftigen, definierten Zeitraums bezeichnet.

Mit dem Begriff "Steuergrößen" werden Daten bezeichnet, die eine Korrelation zum Energieverbrauch eines insbesondere industriellen Produktionsprozesses haben und deren Kenntnis ein hinreichendes Wissen über die Ausprägung der benötigten Energiemengen verschafft. Hierzu zählen beispielsweise, aber nicht ausschließlich:
- Physikalische Parameter der eingesetzten Produktionsanlage(n),
- Prozessparameter der eingesetzten Produktionsanlage(n),
- Werkstoffeigenschaften,
- Produktionsplanungsdaten,
- Betriebstagebuch, welches die Auslastung der eingesetzten Anlagen oder Maschinen eines Verbrauchers in definierten Zeitintervallen dokumentiert,
- Mess- und Zählerdaten der Produktionsanlage(n) oder
- Energiekosten.

Mit "Energielastmuster" wird im folgenden der in einem Diagramm dargestellte Energieverbrauch eines insbesondere industriellen Verbrauchers über ein definiertes Zeitintervall eines Produktionsprozesses bezeichnet.

"Produktionsplanungsdaten" bezeichnet einen Sammelbegriff für Daten produktionsbezogener Zustände oder Prozesse eines insbesondere industriellen Unternehmens. Hierzu zählen beispielsweise, aber nicht ausschließlich:
- auftragsbezogene Daten, wie z.B. Produktionszeiten, -mengen, Qualitäten,
- maschinenbezogenen Daten wie Laufzeiten, Unterbrechungszeiten, gefertigte Stückzahlen einer Maschine, Meldungen und Störungen, Bedienereingriffe, Verbrauch an Material, Energie und Hilfsmitteln,
- materialbezogenen Daten, z.B. Zu- und Abgang von Materialien.

Mit dem Adjektiv "historisch" werden in der Vergangenheit abgelaufene Prozesse, festgestellte Messgrößen und ermittelte Datenreihen eines insbesondere industriellen Verbrauchers benannt.

"Abweichungstoleranz" bezeichnet die erlaubte Differenz zwischen den zu ermittelnden Ist-Werten der Steuergrößen historischer Produktionsprozesse und den gesuchten Soll-Werten der Steuergrößen eines zukünftigen Produktionsprozesses.

### Stand der Technik

Durch die Liberalisierung des Energiemarkts, insbesondere in Europa ist es für einen Verbraucher nicht mehr zwingend notwendig, Energie beispielsweise in Form von Strom oder Gas, und den Transport dieser Energie von einem einzigen Anbieter zu beziehen. Der Verbraucher kann nun zwischen Energieversorger und Energielieferant frei wählen. Entscheidungserhebliche Kriterien für diese Auswahl sind die Menge der lieferbaren Energie, die Zeit in welcher diese Energie bereitgestellt werden kann sowie die Kosten für die Bereitstellung dieser Energie.

Im liberalisierten bzw. deregulierten Energiemarkt werden die Leistungen der Energieerzeugung, des Energietransports und des Vertriebs der Energie an die Verbraucher von unterschiedlichen Unternehmen ausgeführt. Der mit dem Verbraucher in geschäftlichen Kontakt tretende Energielieferant bezieht die benötigten Energiemengen von den Energieerzeugern. Darüber hinaus bestehen Möglichkeiten Energiemengen von sog. Energiebörsen zu beziehen. Die Energiebörsen stellen virtuell Energiemengen bereit, die bei den Energieversorgern oder -lieferanten im Überschuss vorhanden sind. In Deutschland und auch in den meisten europäischen Ländern schließen gewerbliche, insbesondere industrielle Verbraucher mit ihrem Energielieferanten längerfristige Verträge, die meist über mindestens ein Jahr laufen. Die zwischen den Verbrauchern und Energielieferanten bestehenden Verträge sind als "Vollversorgungsverträge" ausgestaltet. Dies bedeutet, dass der Energielieferant die Bereitstellung der Mengen an Energie schuldet, die der Verbraucher tatsächlich benötigt. Da der Energieverbrauch bei insbesondere industriellen Kunden in Abhängigkeit von den Produktionsprozessen, der Produktionsart und der Auftragslage stark schwanken, kommt es vor, dass die bereitgestellten Energiemengen den tatsächlichen Bedarf der Verbraucher über- bzw. unterschreiten. Da der Energielieferant vertraglich zur Vollversorgung verpflichtet ist, hat er die Energiemengenüber- bzw. Unterkapazitäten gegenüber dem Verbraucher auszuregeln. Dies bedeutet, dass er - meist zu erhöhten Preisen - zusätzlich erforderliche Energiemengen bei den Energieversorgern bzw. Energiebörsen einkaufen bzw. Überkapazitäten - meist zu schlechteren Konditionen - an Energiebörsen abgeben muss. Die zu erwartenden Schwankungen in der Abnahme der benötigten Energie (im folgenden auch "Prognoseplanrisiko" genannt) eines Unternehmens wird seitens der Energielieferanten auf Basis des vorangegangenen Jahres eingeschätzt und bepreist. Damit gibt der Energielieferant das wirtschaftliche Prognoseplanrisiko durch höhere Energiepreise an die Verbraucher weiter. Für die betriebswirtschaftliche Kalkulation und für die Minimierung der Kostenrisiken ist es für den Energielieferanten daher essentiell, die Mengen der benötigten Energie der Verbraucher so genau wie möglich vorhersagen zu können. Je besser die benötigten Energiemengen des Verbrauchers (im folgenden auch Prognoseplan genannt) prognostiziert werden kann, desto geringer ist das wirtschaftliche Risiko des Energielieferanten. Die hierdurch gewonnenen Preisvorteile werden von den Energielieferanten an die Verbraucher in Form von günstigeren Energiekosten weitergegeben.

Energieprognosen werden derzeit in unterschiedlichster Form vorwiegend von den Energieversorgern, insbesondere für Haushalts- bzw. Privatkunden getätigt. Für diesen Kundenkreis lässt es sich in einfacher Weise im Wege des sogenannten "Vergleichstagsverfahren" über den historisch vorhandenen Tagesablauf und weiteren Daten, beispielsweise einer aktuellen Wetterprognose, erreichen, dass eine ausreichend genaue Prognose erstellt wird (beispielsweise der Verbrauch an einem Sonnentag im Sommer). Durch die Vielzahl der Haushalte in einem Versorgungsgebiet tritt ein statistischer Mittlungseffekt ein, der eine hinreichend präzise Prognose der benötigten Energiemenge zumindest für Privathaushalte ermöglicht. Für die insbesondere industriellen Kunden genügt eine derartige Prognose nicht, da es hier aufgrund der unterschiedlichen Produktionsprozesse und Produktionsarten an einem statistischen Mittelwert fehlt. Verschieben sich bei einem Kunden beispielsweise die Arbeitszeiten im Rahmen einer Produktion, so treten bereits erhebliche Abweichungen ein, die dazu führen können, dass der Energieversorger nicht genügend Energie bereitstellt. Aufgrund dieser von äußeren Kriterien abhängigen Schwankungen ist die Ermittlung eines statistischen Mittelwertes für mehrere Industrieverbraucher nicht praktikabel und nicht hinreichend aussagekräftig, um den tatsächlich benötigten Strombedarf vorherzusagen.

Aus US 2003/0041017 A1 ist ein Managementsystem und ein Verfahren bekannt, welches auf dem Wege der Interaktion zwischen einem Energielieferanten und einer Mehrzahl von Verbrauchern vorsieht, dass der oder die Verbraucher dem Energielieferanten die Menge der benötigten Energie in Form von Energielastprofilen mitteilt. Diese Energielastprofile werden von den Energielieferanten gesammelt. Anschließend teilt der Energielieferant dem oder den Verbraucher(n) eine Auswahl besonderer Tagesangebote für den Energiebezug mit. Der oder die Verbraucher treffen aus diesen Tagesangeboten nach bestimmten Kriterien eine vorteilhafte Auswahl. Der Energielieferant wird über die Auswahl der Verbraucher informiert.

Basierend auf den Entscheidungen der Verbraucher über die Tagesangebote fordert der Energielieferant entweder zusätzliche Energie an, bietet überflüssige Energie Energiebörsen an und/oder bietet bevorzugten Kunden besondere Ermäßigungen an. Der genannte Stand der Technik offenbart, dass für eine Bestimmung des benötigten Energielastprofils der historische Energieverbrauch der im Rahmen eines Produktionsprozesses eingesetzten Maschinen sowie Daten über die geplante Produktion (Produktionsplanungsdaten oder "production profiles") herangezogen werden. Die verwandten Produktionsplanungsdaten setzen sich aus Informationen über Aufträge, Maschinenzeit- und Arbeitskraftressourcen sowie den Warenlagerbestand zusammen.

Aus US 2003/0041016 A1 ist ein Verfahren und ein System für den regulierten Energiemarkt bekannt, welche vorsehen, dass der Energieverbraucher und der Energielieferant gemeinschaftlich Energieverbrauchsprofile erstellen, welche dem Energielieferanten zur Verfügung gestellt werden.

Nachteil dieses Stands der Technik ist, dass nicht gelehrt wird, wie unter Heranziehung der Produktionsplanungsdaten und des historischen Energieverbrauchs eines Verbrauchers aussagekräftige und möglichst präzise Prognosen über den zukünftigen Energiebedarf gewonnen werden können.

Aus dem Stand der Technik ist schließlich ein Verfahren zur Pregnese der benötigten Energiemengen eines industriellen Verbrauchers bekannt, welches auf der Basis einer mathematischen verfahrenstechnischen Beschreibung eines Aggregats oder einer Maschine den Energieverbrauch eines geplanten Produktionsprozesses berechnet. Zusätzlich werden die physikalischen Parameter des verarbeitenden Stoffes (z.B. Abmessung und Temperatur einer Stahlbramme beim Walzen) in die Berechnung einbezogen. Dieses Verfahren ist sehr aufwendig, da für jede Anlage ein spezifisches Modell gebildet werden muss. Hierdurch wird das Verfahren zeit- und kostenintensiv.

### Aufgabe der Erfindung

Aufgabe der Erfindung ist es demnach, die zukünftig benötigte Energiemenge eines insbesondere industriellen Verbrauchers einfach zu prognostizieren und/oder mindestens einen Nachteil des genannten Stands der Technik zu vermeiden.

### Lösung der Aufgabe

Zur Lösung der Aufgabe wird ein Verfahren zur Prognose der benötigten Energiemenge, eines insbesondere industriellen Verbrauchers von einem Energieversorger oder einem Energielieferanten vorgeschlagen, dass durch folgende Verfahrensschritte gekennzeichnet ist:
a) Erstellung einer Ausgangsdatenreihe aus Steuergrößen eines zukünftigen, Produktionsprozesses in einem definierten Zeitraum bei mindestens einem Verbraucher;
b) Ermittlung mindestens eines historischen Produktionsprozesses in Form einer Zieldatenreihe durch Vergleich der erstellten Ausgangsdatenreihe mit Datenreihen aus Steuergrößen historischer Produktionsprozesse;
c) Feststellung des zu dem ermittelten historischen Produktionsprozess korrespondierenden historischen Energielastmusters;
d) Erstellung eines Prognoseplans anhand des festgestellten historischen Energielastmusters;
e) Übermittlung des erstellten Prognoseplans an einen Energieversorger oder - lieferanten.

Der erfindungswesentliche Gedanke besteht dabei darin, dass sich bei Produktionsanlagen gewerblicher, insbesondere industrieller Verbraucher das Energielastmuster für den Energieverbrauch in typischer Weise äquivalent zu dem Produktionsprozess verhält und das Energielastmuster sich somit bei gleicher Ausgangslage (Produktionsprofil) wiederholen. Durch die Ermittlung historischer Energielastmuster, die aufgrund ihrer Steuergrößen mit den geplanten Produktionsprozessen identisch oder nahezu identisch sind, lassen sich zuverlässige Prognosen über die zukünftigen Energielastmuster treffen. Dies gilt insbesondere für Verbraucher mit wiederkehrendem Verbrauchsverhalten, das von Faktoren des Produktionsprozesses (wie z.B. Schichten, Produktarten, Werkzeugwechselzeiten, Auftragslage, etc.) abhängt. Das erfindungsgemäße Verfahren kann dabei allein oder vorzugsweise als Ergänzung bekannter Prognoseverfahren angewendet werden.

Ferner wird ein System zur Prognose der benötigten Energie, insbesondere eines industriellen Verbrauchers von einem Energieversorger oder einem Energielieferanten vorgeschlagen.

Des Weiteren wird eine zur Durchführung des erfindungsgemäßen Verfahrens geeignete Vorrichtung vorgeschlagen, die vorzugsweise eine Datenverarbeitungsanlage verwendet.

Schließlich wird vorgeschlagen, das erfindungsgemäße Verfahren für die Prognose der zukünftig benötigten Energiemengen eines insbesondere industriellen Verbrauchers von einem Energieversorger oder einem Energielieferanten zu verwenden.

### Vorteile der Erfindung

Die mit der Erfindung erzielten Vorteile bestehen insbesondere darin, dass eine zielgerichtete Prognose der benötigten Energiemengen technisch und technologisch einfach auch für solche Verbraucher durchgeführt werden kann, deren Energieverbrauch sich aufgrund stark schwankender Bezugsmengen nicht durch statistische Mittelwerte ermitteln lässt.

Ein weiterer Vorteil besteht darin, dass ein verbraucherspezifisches Energielastmuster erstellt wird ohne komplizierte und aufwendige mathematische Modelle der eingesetzten industriellen Anlagen oder Maschinen eines Produktionsprozesses errechnen zu müssen.

Als vorteilhaft erweist es sich, dass aufgrund der ermittelten historischen Produktionsprozesse für den Verbraucher nicht nur die effektive Menge der benötigten Energie ablesbar ist, sondern auch der Zeitpunkt wann eine bestimmte Energiemenge innerhalb eines Produktionsprozesses gebraucht wird. Werden diese Informationen an den Energieversorger oder Energielieferanten mitgeteilt, können diese gezielt die zu einem bestimmten Zeitpunkt benötigte Energiemenge - bzw. eine geringfügig größere Menge - bereitstellen. Über- oder Unterkapazitäten werden somit vermieden.

Ein weiterer Vorteil besteht darin, dass die Energieprognose auf Steuergrößen basiert, die variabel sind. Anhand der ermittelten Energieprognose werden dann E-nergiefahrpläne erstellt, welche die Grundlage für den zukünftigen Energiebezug bilden. Eine Änderung des Energiefahrplans hat somit unmittelbaren Einfluss auf die Menge und den Zeitpunkt des Energiebezugs. Zur Verbesserung des Energiefahrplans, z.B. in Form einer Kostenreduktion durch Anpassung der Energiebezugszeiten an Niedrigpreistarife (bspw. zu besonderen Tages- oder Nachtzeiten), können die Steuergrößen des zukünftigen Produktionsprozesses verändert werden. Durch unmittelbare Veränderungen der Produktionsprozesse können Energie und damit Kosten gespart werden. Solche Energiesparmaßnahmen lassen sich mit Hilfe des erfindungsgemäßen Verfahrens unmittelbar quantifizieren, da die geänderten Steuergrößen wiederum als Ausgangsdatenreihe dem Prognoseverfahren zugrundegelegt werden und zu einem neuen Energiefahrplan führen. Anhand dieses neuen Energiefahrplans kann der zukünftige Produktionsprozess analysiert und gesteuert werden.

Schließlich besteht für den Verbraucher aufgrund des erfindungsgemäßen Prognosesystems und der Kenntnis der benötigten Energiemengen eines definierten Zeitraums die Möglichkeit, auf dem sogenannten Spot-Markt oder bei Energiebörsen zusätzliche Energie einzukaufen bzw. überschüssige oder selbstproduzierte Energie (z.B. mittels einer Gasturbine) über Energiebörsen Dritten zur Verfügung zu stellen.

### Beschreibung eines Ausführungsbeispiels

Ein Ausführungsbeispiel der Erfindung wird anhand von Zeichnungen nachfolgend näher erläutert. Darin zeigen:
- **Figur 1**: eine schematische Darstellung der Funktionsweise des Verfahrens sowie des Prognosesystems;
- **Figur 2**: ein Systemdiagramm über den Ablauf des Energieprognoseverfahrens, unterteilt in die in Figuren 2A bis 2F gezeigten Verfahrensschritte;
- **Figur 3**: ein Funktionsschema einer Vorrichtung zur Energieprognose.

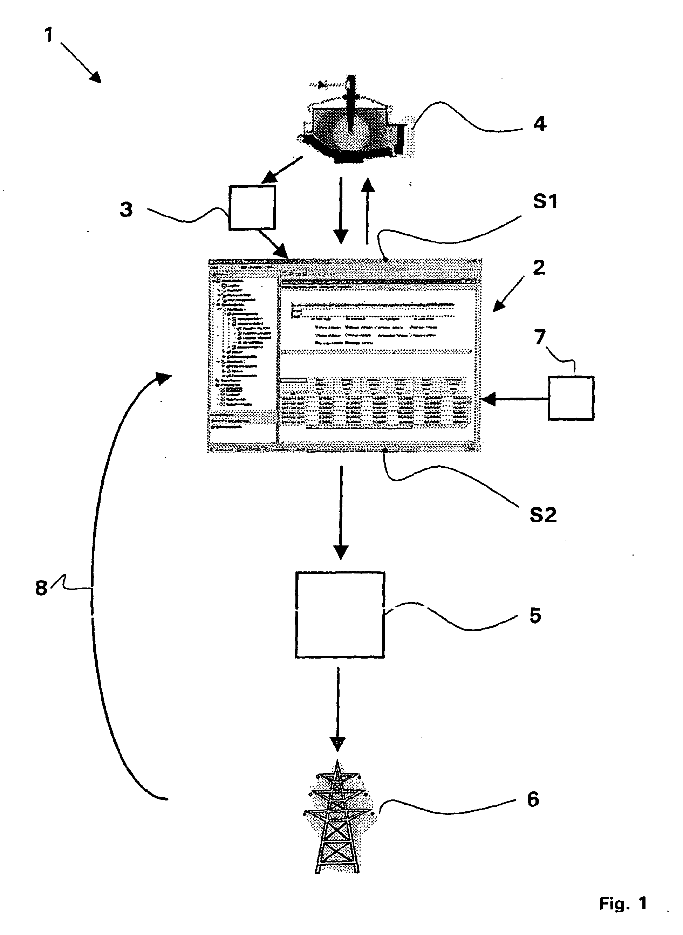

Das in Figur 1 dargestellte System 1 besteht aus Datenverarbeitungsvorrichtung 2, welche wiederum Schnittstellen S1 und S2 umfasst. Die erste Schnittstelle S1 ist dafür vorgesehen, Steuergrößen 3 für die Produktion (im Beispiel: ein Gleichstrom-Elektroofen 4) zu beziehen. Solche Steuergrößen 3 können beispielsweise Informationen über Aufträge (Art der Produkte, Mengen, Liefertermine, usw.), Daten aus Betriebstagebüchern, physikalische Parameter der eingesetzten Produktionsanlage(n), Werkstoffeigenschaften, Produktionsplanungsdaten aus PPS-Systemen oder Mess- und Zähldaten der Produktionsanlage(n) sein. Bezugsquelle für diese Steuergrößen 3 können dabei auch Messstellen an der/den Produktionsanlage(n) sein. Auf dieser Grundlage ermittelt die Datenverarbeitungsvorrichtung 2 die für die zukünftigen Produktionsprozess benötigte Energiemenge und erstellt eine Prognoseplan 5. Dieser wird über die Schnittstelle S2 ausgegeben und an einen Energieversorger oder -lieferanten 6 übermittelt. Die tatsächlich gelieferte Energiemenge 8 wird dokumentiert und mit dem erstellten Prognoseplan 5 verglichen, um das erfindungsgemäße Verfahren zu überprüfen und ständig zu optimieren.

Wahlweise kann bei der Berechnung der benötigten Energiemenge zusätzlich für den Benutzer der Datenverarbeitungsvorrichtung 2 eine Kosteninformation 7 eingeholt werden, anhand derer zusammen mit der zukünftig benötigten Energiemenge die zukünftig entstehenden Energiekosten prognostiziert werde können. Hierdurch besteht für den Verbraucher die Möglichkeit, eine Simulation seines Energieverbrauchs durchzuführen, um die Energiekosten zu optimieren, beispielsweise durch Bezug der Energie von anderen Anbietern.

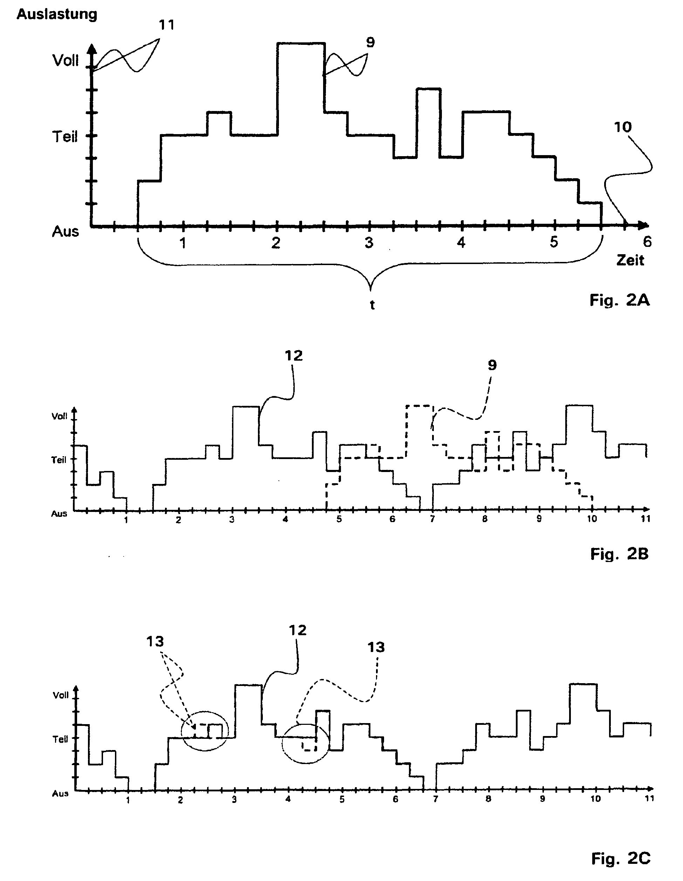

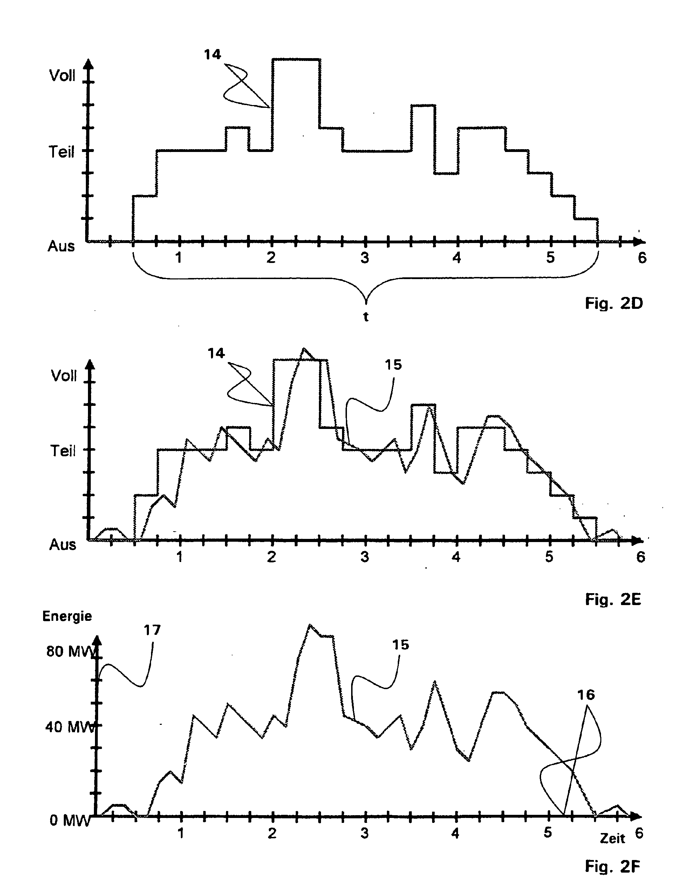

Das in der Datenverarbeitungsvorrichtung 2 ablaufende Prognoseverfahren wird in Figuren 2A bis 2F schematisch gezeigt. Zunächst erfolgt die Erfassung der Steuergrößen 3 des zukünftigen Produktionsprozesses (nicht dargestellt). Anschließend wird anhand der Steuergrößen 3 für einen definierten Zeitraum t eine Ausgangsdatenreihe 9 erstellt. Figur 2A zeigt eine beispielhafte Ausgangsdatenreihe 9 in Form eines kartesischen Koordinatensystems. Die Abszisse 10 gibt dabei den Zeitraum in Stunden an. Die Ordinate 11 zeigt in dem Beispiel die Laststufe einer Industrieanlage unterteilt in Voll- und Teillast sowie Null-Last. In dem nächsten, in Figur 2B gezeigten Verfahrensschritt wird in den gespeicherten Datenreihen historischer Produktionsprozesse 12 nach einer Zieldatenreihe 14 (wie in Figur 2D dargestellt) gesucht, die der erstellten Ausgangsdatenreihe 9 möglichst nahe kommt.

Figur 2C zeigt eine vorteilhafte Ausführung des nächsten Verfahrensschritts. Hier wird zunächst nach einer identischen historischen Zieldatenreihe 14 (wie in Figur 2D dargestellt) gesucht. Erst wenn eine solche nicht ermittelt werden kann, wird in einem iterativen Verfahren weitergesucht (korreliert), wobei die ermittelten historischen Zieldatenreihen nun innerhalb einer zuvor definierten Abweichungstoleranz 13 liegen müssen. Der Abweichungstoleranzbereich 13 wird dabei schrittweise bis zu einem zuvor definierten Maximalbereich vergrößert, bis eine Zieldatenreihe 14 (wie in Figur 2D dargestellt) gefunden wird, welche die kleinstmögliche Abweichung zur Ausgangsdatenreihe 9 aufweist.

Der derart ermittelte, in Figur 2D gezeigte Zeitabschnitt t der historischen Datenreihen 12, der die Zieldatenreihe 14 darstellt, repräsentiert einen historischen Produktionsprozess. In Figur 2E wird im nächsten Verfahrensschritt der reale, zu diesem Zeitabschnitt entstandene Ist-Energieverbrauch in Form eines historischen Energielastmusters 15 extrahiert. Das in Figur 2F wiedergegebene historische Energielastmuster 15 zeigt in dem Ausführungsbeispiel in einem kartesischen Koordinatensystem auf der Abszisse 16 den Zeitverlauf in Stunden und auf der Ordinate 17 die verbrauchte Energiemenge, im Beispiel in Megawatt an. Das historische Energielastmuster 15 wird schließlich als Prognose der Erstellung eines Prognoseplans 5 über den Energieverbrauch des zukünftigen Produktionsprozesses zugrundegelegt und an den Energieversorger oder -lieferanten 6 (nicht dargestellt) übermittelt.

Da mit dem zuvor beschriebenen Verfahren eventuell mehrere Zieldatenreihen 14 historischer Produktionsprozesse ermittelt werden, die alle der eingestellten Abweichungstoleranz 13 entsprechen, werden in einer vorteilhaften Ausführungsform des erfindungsgemäßen Verfahrens verschiedene Ausgangsdatenreihe 9 aus unterschiedlichen Steuergrößentypen 3 zur Ermittlung eines historischen Produktionsprozesses herangezogen und mindestens eine historische Datenreihe 12 für jede Ausgangsdatenreihe 9 in dem definierten Zeitraum t ermittelt. Alle ermittelten Zieldatenreihen 14 werden in dieser vorteilhaften Ausführungsform nun an eine weitere Datenverarbeitungsvorrichtung 22 gegeben, die wiederum über eine einstellbare Abweichungstoleranz die Zieldatenreihe 14 bestimmt, welche die geringste Abweichung zur Ausgangsdatenreihe 9 aufweist.

In einer weiteren vorteilhaften Ausführungsform des erfindungsgemäßen Verfahrens können die gewonnenen Prognosedaten mit Daten aus anderen Prognoseverfahren kombiniert werden, um im Wege des Datenabgleichs die Energieprognose zu optimieren. So können beispielsweise bekannte Prognoseverfahren wie die Ermittlung durch verfahrenstechnische Modelle, durch Vergleichstageverfahren oder durch manuelle Dateneingabe je nach Verfügbarkeit und Plausibilität herangezogen werden. Die Plausibilität des jeweils angewandten Verfahrens lässt sich dabei beispielsweise durch einen Vergleich der prognostizierten Soll-Energiemenge mit den tatsächlich bezogenen Ist-Energiemenge ermitteln. So kann z.B. eine Überprüfung danach erfolgen, ob nach dem herangezogenen Prognoseverfahren die vertraglich mit dem Energieversorger oder -lieferanten vereinbarte Netzanschlusskapazität um eine definierbare Stellgröße (z.B. eine definierte Prozentzahl) über- oder unterschritten, die bisherige Höchstlast um einen bestimmten Prozentsatz überschritten, die bisherige minimale Last bei Produktion um einen bestimmte Prozentsatz unterschritten oder ob generell die bisherige Last ohne Produktion (Null-Last) unterschritten würde. Zusätzlich kann für eine Plausibilitätsprüfung in Betracht gezogen werden, ob eine Prognose auf Grund der verfügbaren Daten (z.B. Steuergrößen 3 oder Produktionsdaten) überhaupt erstellt werden kann.

Je größer die Abweichungen zwischen den Ausgangsdatenreihen 9 (= Ist-Werten) und den ermittelten Zieldatenreihen 14 (= Soll-Werten) sind, um so unpräziser ist die Prognose der zukünftig benötigten Energiemengen. Um den Prognosewert einer ermittelten historischen Datenreihe, d.h. die Wahrscheinlichkeit einer zutreffenden Aussage über die benötigten Energiemengen festzulegen, wird - in einer weiteren vorteilhaften Ausführungsform - jede Zieldatenreihe 14 mit einem Wert gekennzeichnet, der die Abweichung des Soll- vom Ist-Wert in Prozentsätzen ausdrückt. Der Verbraucher kann dann vor der Durchführung des erfindungsgemäßen Verfahrens einstellen, dass nur Zieldatenreihen 14 ausgegeben werden, die eine Mindestprozentzahl erreichen. Mit zunehmendem Umfang der gespeicherten historischen Daten, kann die Abweichungstoleranz durch Erhöhung des zu erreichenden Prozentsatzes verringert werden. Das Energieprognosesystem adaptiert sich somit selbst.

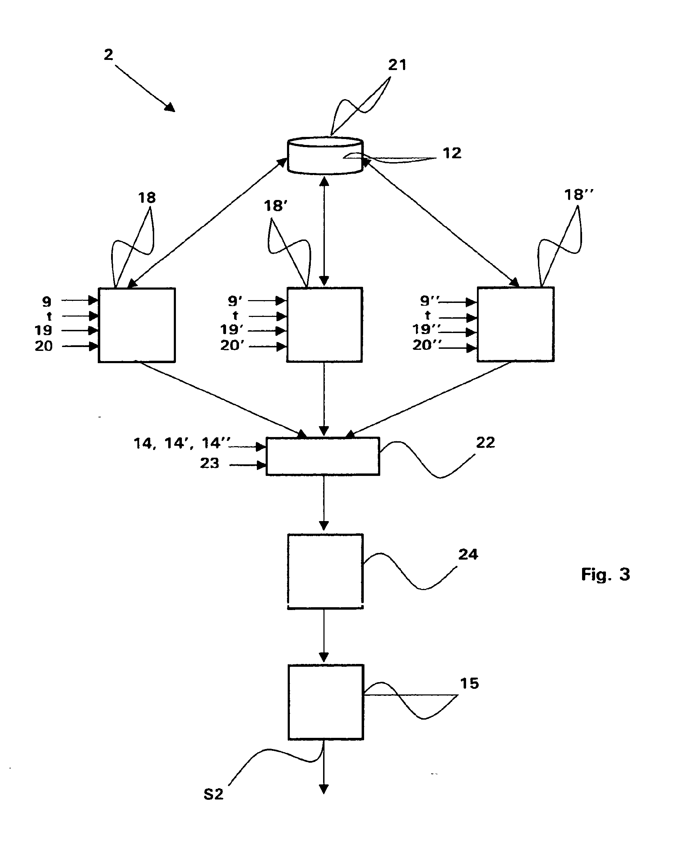

Figur 3 zeigt ein vorteilhaftes Ausführungsbeispiel der Datenverarbeitungsvorrichtung 2 zur Durchführung des erfindungsgemäßen Verfahren. In ein Rechnerbaustein 18 werden die erstellte Ausgangsdatenreihe 9 sowie ein definiertes Zeitintervall t eingegeben und, je nach zugrundegelegten Steuergrößentyp, mit einer entsprechenden ldentifikationsvariablen 19 gekennzeichnet. Zusätzlich kann eine Abweichungstoleranz 20 definiert werden. Der Rechnerbaustein 18 sucht in einer Datenbank 21 in historischen Datenreihen 12 mit übereinstimmender Identifikationsvariabel 19 nach einem Zeitabschnitt t der in der definierten Abweichungstoleranz 20 liegt und die geringste Abweichung zur Ausgangsdatenreihe 9 aufweist.

Um das Prognoseergebnis zu optimieren wird in dem in Figur 3 gezeigten vorteilhaften Ausführungsbeispiel mindestens eine weitere Ausgangdatenreihe 9', 9" für denselben Zeitintervall t, mit einer Identifikationsvariablen 19', 19" versehen und in einen weiteren Rechnerbaustein 18', 18" eingelesen. Der jeweilige Rechnerbaustein 18', 18" sucht dann in der Datenbank 21 wiederum nach einer historischen Datenreihe 12 unter der entsprechenden Identifikationsvariablen 19', 19", welche die kleinstmögliche Abweichung zu der Ausgangsdatenreihe 9' bzw. 9" innerhalb der eingestellten Abweichungstoleranz 20', 20". Die nun in den Rechenbausteinen 18, 18', 18" ermittelten historischen Produktionsprozesse 14, 14', 14" werden in einen Korrelationsrechner 22 eingelesen, welcher die Zieldatenreihe 24, bestimmt, die einer einstellbaren Abweichungstoleranz 23 am nächsten kommt. Für die so ermittelte optimierte Zieldatenreihe 24 wird das zu diesem Zeitabschnitt t entstandene historische Energielastmuster 15 extrahiert, das als Prognoseergebnis über die Schnittstelle S2 ausgegeben wird.

### BEZUGSZEICHENLISTE

- 1: Energieprognosesystem
- 2: Datenverarbeitungsvorrichtung
- 3: Steuergröße
- 4: Gleichstrom-Elektroofen
- 5: Prognoseplan
- 6: Energieversorger oder -lieferant
- 7: Kostenaufstellung/ -information
- 8: Energiemenge
- 9: Ausgangsdatenreihe
- 10: Abszisse
- 11: Ordinate
- 12: Historischer Produktionsprozess
- 13: Abweichungstoleranz
- 14: Zieldatenreihe
- 15: Historisches Energielastmuster
- 16: Abszisse
- 17: Ordinate Rechnerbaustein
- 18: ldentifikationsvariabel
- 19: Abweichungstoleranz
- 20: Datenbank
- 21: Korrelationsrechner
- 22: Abweichungstoleranz
- 23: Zieldatenreihe

## Patentansprüche

1. Verfahren zur Prognose der benötigten Energiemenge eines insbesondere industriellen Verbrauchers von einem Energieversorger oder einem Energielieferanten, **gekennzeichnet durch** folgende Verfahrensschritte:
a) Erstellung einer Ausgangsdatenreihe (9) aus Steuergrößen (3) eines zukünftigen, Produktionsprozesses in einem definierten Zeitraum (t) bei mindestens einem Verbraucher (4, 4an, 4bn);
b) Ermittlung mindestens eines historischen Produktionsprozesses in Form einer Zieldatenreihe (14) **durch** Vergleich der erstellten Ausgangsdatenreihe (9) mit Datenreihen (12) aus Steuergrößen historischer Produktionsprozesse;
c) Feststellung des zu dem ermittelten historischen Produktionsprozess korrespondierenden historischen Energielastmusters (15);
d) Erstellung eines Prognoseplans (5) anhand des festgestellten historischen Energielastmusters (15);
e) Übermittlung des erstellten Prognoseplans (5) an einen Energieversorger oder -lieferanten (6).

2. Verfahren nach Anspruch 1, **dadurch gekennzeichnet, dass** die zu ermittelnden Zieldatenreihen (14) in einem definierbaren Abweichungstoleranzbereich (13) zu den Ausgangsdatenreihen (9) liegen können.

3. Verfahren nach Anspruch 1 oder 2, **dadurch gekennzeichnet, dass**
- mindestens eine weitere Ausgangsdatenreihe (9') aus anderen Steuergrössen (3') erstellt wird;
- anhand dieser weiteren Ausgangsdatenreihe (9') mindestens ein weitere Zieldatenreihe (14') ermittelt wird;
- alle ermittelten Zieldatenreihen (14, 14', 14") nach Maßstab einer definierten Abweichungstoleranz (23) miteinander verglichen und
- die Zieldatenreihe (24) bestimmt wird, welche die geringste Abweichung zu einer definierten Ideal-Datenreihe aufweist.

4. Verfahren nach mindestens einem der vorgenannten Ansprüche, **dadurch gekennzeichnet, dass** wahlweise mindestens einer der nachfolgenden Verfahrensschritte rechnergestützt erfolgt:
a) Erstellung der Ausgangsdatenreihe(n) (9),
b) Ermittlung der Zieldatenreihe(n) (14),
c) Erstellung des Prognoseplans (5),
d) Übermittlung des Prognoseplans.

5. Verfahren nach mindestens einem der vorgenannten Ansprüche, **dadurch gekennzeichnet, dass** die von dem Energieversorger oder Energielieferanten (6) gelieferte Energiemenge (8) in der Datenverarbeitungsvorrichtung (2) gespeichert wird.

6. Verfahren nach mindestens einem der vorgenannten Ansprüche, **dadurch gekennzeichnet, dass**
- zusammen mit der Erstellung eines ersten Prognoseplans (5) anhand des festgestellten Energielastmusters (15) mindestens ein weiterer Prognoseplan (5') mit einem weiteren Energieprognoseverfahren erstellt wird und
- der Verbraucher aus diesen Prognoseplänen (5, 5') eine vorteilhafte Auswahl nach den Kriterien der Verfügbarkeit der ermittelten Energiemengen oder der Plausibilität des erstellten Prognoseplans trifft, wobei die Plausibilität durch einen Vergleich der prognostizierten Soll-Energiemengen mit den tatsächlich bezogenen Ist-Energiemengen erfolgt.

7. Verfahren nach mindestens einem der vorgenannten Ansprüche, **dadurch gekennzeichnet, dass** in Verbindung mit der Erstellung der Energieprognose auch eine Aufstellung über die Kosten (7) der benötigten Energiemenge erfolgt.

8. Verfahren nach Anspruch 7, **dadurch gekennzeichnet, dass** eine Optimierung des Prognoseplans (5) nach Energiekosten, Zeit der Energienachfrage bzw. - lieferung oder der Menge der bezogenen Energie erfolgt.

9. Verfahren nach Anspruch 7, **dadurch gekennzeichnet, dass** eine Optimierung der Menge an benötigter Energie in Bezug auf die Produktionsplanung bzw. in Bezug auf das Verfahren zur Herstellung der Produkte erfolgt.

10. Verfahren nach mindestens einem der vorhergehenden Ansprüche, **dadurch gekennzeichnet, dass** für die Erstellung des Prognoseplans mehrere Verbraucher zu einer Gruppe zusammengeschlossen werden.

11. System zur Prognose der benötigten Energiemengen eines insbesondere industriellen Verbrauchers von einem Energieversorger oder einem Energielieferanten, **gekennzeichnet durch** eine Datenverarbeitungsvorrichtung zur Durchführung folgenden Verfahrensschritte:
a) Erstellung einer Ausgangsdatenreihe (9) aus Steuergrößen (3) eines zukünftigen, Produktionsprozesses in einem definierten Zeitraum (t) bei mindestens einem Verbraucher (4, 4an, 4bn);
b) Ermittlung mindestens eines historischen Produktionsprozesses in Form einer Zieldatenreihe (14) **durch** Vergleich der erstellten Ausgangsdatenreihe (9) mit Datenreihen (12) aus Steuergrößen historischer Produktionsprozesse;
c) Feststellung des zu dem ermittelten historischen Produktionsprozess korrespondierenden historischen Energielastmusters (15);
d) Erstellung eines Prognoseplans (5) anhand des festgestellten historischen Energielastmusters (15);
e) Übermittlung des erstellten Prognoseplans (5) an einen Energieversorger oder -lieferanten (6).

12. System nach Anspruch 11, **gekennzeichnet dadurch, dass** die Datenverarbeitungsvorrichtung
- eine Datenbank (21) mit Datenreihen (12) bestehend aus Steuergrößen historischer Produktionsprozesse sowie
- einen Rechnerbaustein (18) zum Abgleich historischer Datenreihen (12) mit mindestens einer Ausgangsdatenreihe (9) bestehend aus Steuergrößen (3) eines zukünftigen Produktionsprozesses, umfasst.

13. System nach Anspruch 12, **dadurch gekennzeichnet, dass** mindestens ein weiterer Rechnerbaustein (18', 18") sowie einem Korrelationsrechner (22) vorgesehen ist.

## Claims

1. Method for forecasting the amount of energy needed by an, in particular, industrial consumer from an energy supplier or an energy vendor, **characterized by** the following method steps:
a) creating an initial data series (9) from controlled variables (3) of a future production process in a defined period (t) at at least one consumer (4, 4an, 4bn);
b) determining at least one historical production process in the form of a target data series (14) by comparing the initial data series (9) created with data series (12) from controlled variables of historical production processes;
c) determining the historical energy load pattern (15) corresponding to the historical production process determined;
d) creating a forecasting plan (5) by means of the historical energy load pattern (15) determined;
e) conveying the forecasting plan (5) created to an energy supplier or vendor (6).

2. Method according to Claim 1, **characterized in that** the target data series (14) to be determined can be located with a definable deviation tolerance range (13) with respect to the initial data series (9).

3. Method according to Claim 1 or 2, **characterized in that**
- at least one further initial data series (9') is created from other controlled variables (3');
- at least one further target data series (14') is determined by means of this further initial data series (9');
- all target data series (14, 14', 14") determined are compared with one another as determined by a defined deviation tolerance (23) and
- the target data series (24) which has the least deviation from a defined ideal data series is determined.

4. Method according to at least one of the aforementioned claims, **characterized in that** at least one of the following method steps is optionally carried out with processor support:
a) creating the initial data series (9),
b) determining the target data series (14),
c) creating the forecasting plan (5),
d) conveying the forecasting plan.

5. Method according to at least one of the aforementioned claims, **characterized in that** the amount of energy (8) delivered by the energy supplier or energy vendor (6) is stored in the data processing device (2).

6. Method according to at least one of the aforementioned claims, **characterized in that**
- together with the creation of a first forecasting plan (5) by means of the energy load pattern (15) found, at least one further forecasting plan (5') is created by means of a further energy forecasting method, and
- the consumer makes an advantageous selection according to the criteria of the availability of the amounts of energy determined or of the plausibility of the forecasting plan created from these forecasting plans (5, 5'), the plausibility being determined by comparing the nominal amounts of energy forecast with the actual amounts of energy actually procured.

7. Method according to at least one of the aforementioned claims, **characterized in that**, in conjunction with the creation of the energy forecast, a listing about the costs (7) of the amount of energy needed is also made.

8. Method according to Claim 7, **characterized in that** the forecasting plan (5) is optimized with respect to energy costs, time of energy request or delivery or the amount of energy procured.

9. Method according to Claim 7, **characterized in that** the amount of energy needed is optimized with respect to production planning or with respect to the method for producing the products.

10. Method according to at least one of the preceding claims, **characterized in that** a number of consumers are combined to form one group for creating the forecasting plan.

11. System for forecasting the amounts of energy needed by an, in particular, industrial consumer from an energy supplier or an energy vendor, **characterized by** a data processing device for carrying out the following method steps:
a) creating an initial data series (9) from controlled variables (3) of a future production process in a defined period (t) at at least one consumer (4, 4an, 4bn);
b) determining at least one historical production process in the form of a target data series (14) by comparing the initial data series (9) created with data series (12) from controlled variables of historical production processes;
c) determining the historical energy load pattern (15) corresponding to the historical production process determined;
d) creating a forecasting plan (5) by means of the historical energy load pattern (15) determined;
e) conveying the forecasting plan (5) created to an energy supplier or vendor (6).

12. System according to Claim 11, **characterized in that** the data processing device comprises
- a database (21) with data series (12) consisting of controlled variables of historical production processes and
- a processor chip (18) for aligning historical data series (12) with at least one initial data series (9) consisting of controlled variables (3) of a future production process.

13. System according to Claim 12, **characterized in that** at least one further processor chip (18', 18") and a correlation processor (22) are provided.

## Revendications

1. Procédé pour la prévision de la quantité d'énergie demandée par un consommateur, en particulier industriel, à un producteur ou fournisseur d'énergie, **caractérisé par** les étapes de procédé suivantes :
a) élaboration d'une rangée de données de départ (9) à partir de grandeurs de commande (3) d'un futur processus de production pendant une période (t) définie avec au moins un consommateur (4, 4an, 4bn) ;
b) détermination d'au moins un processus de production historique sous la forme d'une série de données cibles (14) par comparaison de la série de données de départ (9) élaborée avec des séries de données (12) à partir de grandeurs de commande de processus de production historiques.
c) fixation du modèle de charge d'énergie (15) historique correspondant au processus de production historique déterminé ;
d) élaboration d'un plan de prévision (5) à l'aide du modèle de charge d'énergie (15) historique constaté ;
e) transmission du plan de prévision (5) élaboré à un producteur ou fournisseur d'énergie (6).

2. Procédé selon la revendication 1, **caractérisé en ce que** les séries de données cibles (14) à déterminer peuvent se situer dans une plage de tolérances d'écart (13) définissable par rapport aux séries de données de départ (9).

3. Procédé selon la revendication 1 ou 2, **caractérisé en ce que**
- au moins une autre série de données de départ (9') est élaborée à partir d'autres grandeurs de commande (3'),
- au moins une autre série de données cibles (14') est déterminée à l'aide de cette autre série de données de départ (9').
- toutes les séries de données cibles (14, 14', 14") déterminées sont comparées les unes avec les autres en fonction d'une tolérance d'écart (23) définie et
- la série de données cibles (24) est déterminée, laquelle présente le plus faible écart par rapport à une série de données idéale définie.

4. Procédé selon au moins l'une quelconque des revendications précédentes, **caractérisé en ce qu'**en option au moins l'une des étapes de procédé suivantes s'effectue de façon automatisée :
a) élaboration de la (des) série(s) de données de départ (9),
b) détermination de la (des) série(s) de données cibles (14)
c) élaboration du plan de prévision (5),
d) transmission du plan de prévision.

5. Procédé selon au moins l'une quelconque des revendications précédentes, **caractérisé en ce que** la quantité d'énergie (8) fournie par le producteur ou fournisseur d'énergie (6) est stockée dans le dispositif de traitement de données (2).

6. Procédé selon au moins l'une quelconque des revendications précédentes, **caractérisé en ce que**
- au moins un autre plan de prévision (5') est élaboré avec un autre procédé de prévision d'énergie conjointement avec l'élaboration d'un premier plan de prévision (5) à l'aide du modèle de charge d'énergie (1 5) déterminé et
- le consommateur fait une sélection avantageuse à partir de ces plans de prévision (5, 5') selon les critères de la disponibilité des quantités d'énergie déterminées ou de la vraisemblance du plan de production élaboré, la vraisemblance s'effectuant par une comparaison des quantités d'énergie théoriques prévues avec les quantités d'énergie réelles effectivement apportées.

7. Procédé selon au moins l'une quelconque des revendications susmentionnées, **caractérisé en ce qu'** également un relevé concernant les frais (7) de la quantité d'énergie demandée s'effectue en liaison avec l'élaboration de la prévision d'énergie.

8. Procédé selon la revendication 7, **caractérisé en ce qu'**une optimisation du plan de prévision (5) s'effectue selon les coûts d'énergie, le temps de la demande respectivement de la livraison d'énergie ou de la quantité d'énergie apportée.

9. Procédé selon la revendication 7, **caractérisé en ce qu'**une optimisation de la quantité d'énergie demandée intervient par rapport à la planification de production respectivement par rapport au procédé de fabrication des produits.

10. Procédé selon l'une quelconque des revendications précédentes, **caractérisé en ce que** plusieurs consommateurs sont regroupés en un groupe pour l'élaboration du plan de prévision.

11. Système pour la prévision des quantités d'énergie demandées par un consommateur, en particulier industriel, à un producteur ou fournisseur d'énergie, **caractérisé par** un dispositif de traitement de données pour la mise en oeuvre des étapes de procédé suivantes :
a) élaboration d'une série de données de départ (9) à partir de grandeurs de commande (3) d'un futur processus de production dans une période (t) définie avec au moins un consommateur (4, 4an, 4bn) ;
b) détermination d'au moins un processus de production historique sous la forme d'une série de données cibles (14) par comparaison de la série de données de départ (9) élaborée avec des séries de données (12) à partir de grandeurs de commande de processus de production historiques ;
c) détermination du modèle de charge d'énergie (15) historique correspondant au processus de production historique déterminé ;
d) élaboration d'un plan de prévision (5) à l'aide du modèle de charge d'énergie (15) historique déterminé ;
e) transmission du plan de prévision (5) élaboré à un producteur ou fournisseur d'énergie (6).

12. Système selon la revendication 11, **caractérisé en ce que** le dispositif de traitement de données comporte
- une banque de données (21) avec des séries de données (12) constituées de grandeurs de commande de processus de production historiques et
- un module d'ordinateur (18) pour l'ajustement de séries de données (12) historiques avec au moins une série de données de départ (9) constituée de grandeurs de commande (3) d'un futur processus de production.

13. Système selon la revendication 12, **caractérisé en ce qu'**au moins un autre module d'ordinateur (18', 18") et un ordinateur de corrélation (22) sont prévus.
